(19) Europäisches Patentamt / European Patent Office / Office européen des brevets

(11) **EP 2 365 675 B1**

(12) **EUROPEAN PATENT SPECIFICATION**

(45) Date of publication and mention of the grant of the patent:
**10.01.2018 Bulletin 2018/02**

(51) Int Cl.:
**H04L 29/08** *(2006.01)*

(21) Application number: **10155993.8**

(22) Date of filing: **09.03.2010**

(54) **COMMUNICATIONS SYSTEM PROVIDING SERVER LOAD BALANCING BASED UPON LOAD AND SEPARATION METRICS AND RELATED METHODS**

KOMMUNIKATIONSSYSTEM ZUR BEREITSTELLUNG EINES SERVER-LASTAUSGLEICHS BASIEREND AUF LAST- UND GETRENNTHEITSMETRIKEN UND VERFAHREN DAFÜR

SYSTÈME DE COMMUNICATION FOURNISSANT UN ÉQUILIBRAGE DE CHARGE DE SERVEUR BASÉ SUR LES MESURES DE CHARGE ET DE SÉPARATION ET PROCÉDÉS ASSOCIÉS

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**14.09.2011 Bulletin 2011/37**

(73) Proprietor: **BlackBerry Limited Waterloo, ON N2K 0A7 (CA)**

(72) Inventors:
• **Brown, Andrew James Guy**
**Waterloo Ontario N2L 5Z5 (CA)**
• **Wyatt, Colin Ernest**
**Waterloo Ontario N2L 5Z5 (CA)**

(74) Representative: **Roberts, Gwilym Vaughan et al Kilburn & Strode LLP Lacon London 84 Theobalds Road London WC1X 8NL (GB)**

(56) References cited:
WO-A1-99/06913          WO-A2-01/93037
US-A1- 2003 101 278          US-B2- 7 020 698

• FERDEAN C ET AL: "A Response Time-Driven Server Selection Substrate for Application Replica Hosting Systems" APPLICATIONS AND THE INTERNET, 2006. SAINT 2006. INTERNATIONAL SYMPOSIUM ON PHOENIX, AZ, USA 23-27 JAN. 2006, PISCATAWAY, NJ, USA, IEEE, LOS ALAMITOS, CA, USA LNKD-DOI:10.1109/SAINT.2006.7, 23 January 2006 (2006-01-23), pages 259-265, XP010890146 ISBN: 978-0-7695-2508-2
• RANJAN S ET AL: "High-Performance Resource Allocation and Request Redirection Algorithms for Web Clusters" IEEE TRANSACTIONS ON PARALLEL AND DISTRIBUTED SYSTEMS, IEEE SERVICE CENTER, LOS ALAMITOS, CA, US LNKD- DOI:10.1109/TPDS.2007.70810, vol. 19, no. 9, 1 September 2008 (2008-09-01), pages 1186-1200, XP011224443 ISSN: 1045-9219
• PADMANABHAN V N ET AL: "AN INVESTIGATION OF GEOGRAPHIC MAPPING TECHNIQUES FOR INTERNET HOSTS" COMPUTER COMMUNICATION REVIEW, ACM, NEW YORK, NY, US LNKD- DOI:10.1145/964723.383073, vol. 31, no. 4, 1 October 2001 (2001-10-01), pages 173-185, XP001115755 ISSN: 0146-4833
• KARGER D ET AL: "Web caching with consistent hashing" COMPUTER NETWORKS, ELSEVIER SCIENCE PUBLISHERS B.V., AMSTERDAM, NL LNKD- DOI:10.1016/S1389-1286(99)00055-9, vol. 31, no. 11-16, 17 May 1999 (1999-05-17), pages 1203-1213, XP004304549 ISSN: 1389-1286

**(Cont. next page)**

- **KANG-WON LEE ET AL: "Protecting content distribution networks from denial of service attacks" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE LNKD- DOI:10.1109/ICC.2005.1494468, vol. 2, 16 May 2005 (2005-05-16), pages 830-836, XP010825410 ISBN: 978-0-7803-8938-0**

## Description

### Technical Field

This application relates to the field of communications systems, and more particularly, to load balancing within communication or network systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

With the continuing migration to mobile devices that generate these types of client jobs (i.e., Internet access requests, email processing jobs, etc.), there is a commensurate growth in the number of such jobs that service providers have to accommodate. This is in addition to the ever increasing number of client processing jobs generated by other client devices, such as desktop computers. While service providers continue to add additional data centers and servers to accommodate increasing processing loads, routing client jobs to appropriate data centers, and even servers within a given data center, to provide desired efficiencies is important.

As such, some form of load balancing is generally used to even out the processing load among different servers or data centers in communications systems. By way of example, one basic form of load balancing is round-robin load balancing. In accordance with this approach, the servers are arranged in some order, and client jobs are sequentially assigned to the next server in the order until the end is reached, and the process repeats from the beginning. Another load balancing approach is the least load approach, which simply means that when a new client job is received it is assigned to the system server which currently has the least or lightest processing load.

Another form of routing is hash routing. For example, typical hash routing may utilize hashes generated from source and destination addresses of a given job to assign a score or value for the given source-destination pair. By picking a highest or lowest score, for example, this arbitrarily assigns client jobs to respective servers.

Despite the advantages of such approaches, further techniques for load balancing among relatively large groups of servers would be useful in certain applications.

Ferdean C et al, "A Response Time-Driven Server Selection Substrate for Application Replica Hosting Systems" discloses a server selection approach that relies on a response time estimator and a scalable monitoring infrastructure that provides the utilization measures for replica server hosts. Ranjan S et al "High- Performance Resource Allocation and Request Redirection Algorithms for Web Clusters" discloses a suite of algorithms that optimise the performance of dynamic-content applications by considering both server CPU loads and network latencies.

US patent no. 7020698 describes a scalable system and method for locating a closest server in response to a client request via an interactive distribution network, such as the Internet. A closest content server is defined as having the least round trip time for responding to a client request. The system includes a plurality of content servers; and a local server in communication with a plurality of clients, the local server acting as a proxy for communicating client requests from clients to a redirection server. Client network distance and load information is periodically collected at each content server in the network from clients communicating with each of the respective content servers.; The redirection server periodically aggregates the network distance and load information from each content server to create client clusters from both current and previously aggregated network distance and load information. Each client cluster represents a division or partition of the total IP address space. Each client cluster is then mapped (paired) to one or more content servers in the network. The mapping or pairing is then utilized to respond to client DN requests received from any client in the network. Another aspect involves considering the respective capacities of the content servers in the network. A selection probability is assigned to each content server/domain index pair to prevent the repeated selection of the content server having lowest round trip time thereby overloading that server's service capacity. The selection probabilities assigned to each content server effect a load balancing to prevent overloading. Another aspect involves collecting the distance and load information without incurring any overhead cost by passively collecting TCP information as it is transmitted from clients in communication with content servers in the course of normal communications.

### Brief Description of the Drawings

FIG. 1 is a schematic block diagram of a communications system in accordance with an example embodiment providing enhanced load balancing techniques.

FIGS. 2 and 3 are flow diagrams illustrating method aspects associated with the system of FIG. 1.

FIG. 4 is a block diagram of an example embodiment of a mobile device that may be used with the system of FIG. 1.

FIG. 5 is a block diagram of an example embodiment of a communication subsystem component of the mobile device of FIG. 4.

FIG. 6 is an example block diagram of a node of a wireless network.

FIG. 7 is a block diagram illustrating components of a host system in one example configuration for use with the wireless network of FIG. 6 and the mobile device of FIG. 4.

## Detailed Description

The present description is made with reference to the accompanying drawings, in which example embodiments are shown. However, many different embodiments may be used, and thus the description should not be construed as limited to the embodiments set forth herein. Rather, these example embodiments are provided so that this disclosure will be thorough and complete. Like numbers refer to like elements throughout, and prime notation is used to indicate similar elements or steps in alternative example embodiments.

Generally speaking, a communications system is disclosed herein which includes a plurality of client devices configured to generate client processing jobs and each having a respective unique client identification (ID) associated therewith. The system further includes a plurality of geographically spaced apart servers configured to process the client processing jobs, and each having a respective unique server ID associated therewith. Moreover, the system additionally includes a load balancer.

The load balancer disclosed herein is configured to receive the client processing jobs from the plurality of client devices, and for each client processing job, generate a respective load balancing score for each server, wherein the load balancing score is a function of the client ID of the client device requesting the client processing job, a hash of the server ID of each server, a processing load metric for each server, and a separation metric corresponding to a separation between the requesting client device and each server. The load balancer is also configured to assign each client processing job to a respective server based upon the load balancing scores for the client processing job. Accordingly, the load balancer may usefully provide a preference to servers that have a relatively small separation with respect to a given client device, yet still account for server load to provide enhanced performance.

By way of example, the separation metric may correspond to a number of network nodes between the requesting client device and each server, a geographic distance between the requesting client device and each server, or a network latency between the requesting client device and each server. Furthermore, the load balancer may be configured to generate the respective load balancing score for each server based upon a hash of the client ID, the separation metric, and a hash of the server ID and the processing load metric.

In addition, the load balancer may be configured to assign each client processing job to a respective server having a lowest load balancing score from among the load balancing scores for the client processing job. By way of example, the processing jobs may comprise Internet access jobs. Further, at least some of the plurality of client devices may comprise mobile wireless communications devices, such as cellular devices, for example.

A related load balancer method according to claim 6 is also provided.

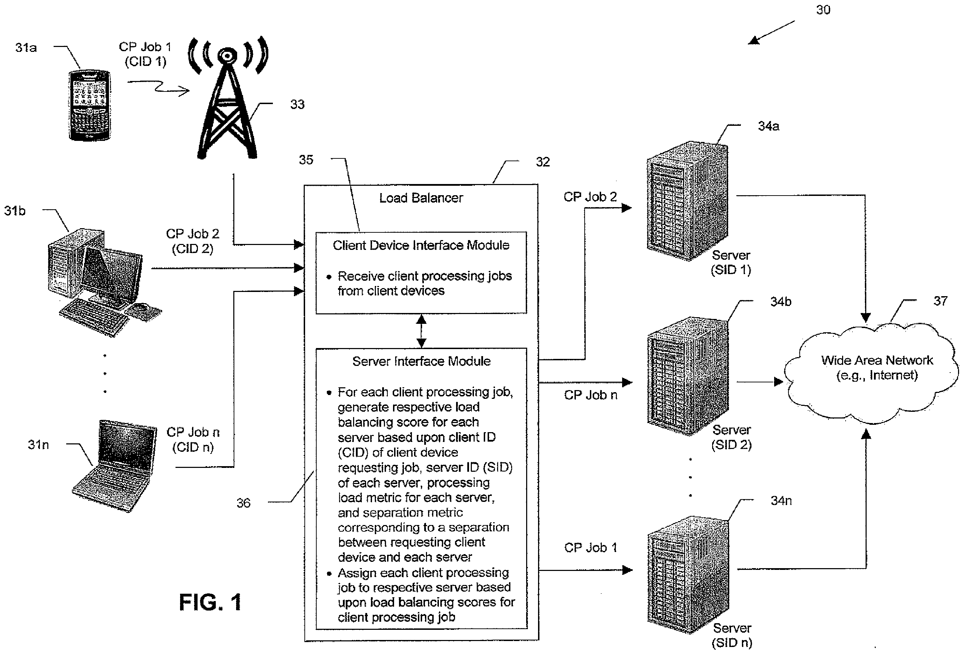

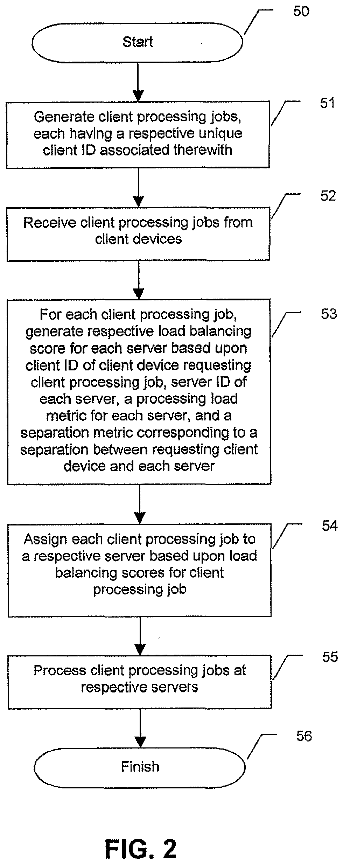

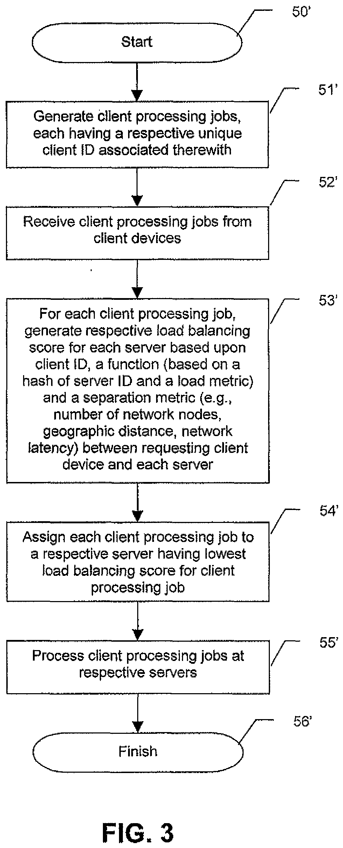

FIG. 1 is a schematic block diagram of a communication system in accordance with an example embodiment providing load balancing techniques. FIGs. 2-3 are flow diagrams each illustrating example embodiment methods associated with the system of FIG. 1. In FIG. 1, a communications system **30** illustratively includes a plurality of client devices **31a-31n,** which are configured to generate client processing jobs such as Internet access requests, email processing jobs, calendar or address book synchronization jobs, etc. At Block **50** of FIG. 2 and Block **50'** of FIG. 3, each method starts. In the present examples, the client device **31a** is a mobile wireless communications device (i.e., a mobile device), namely a cellular device which generates and communicates its client processing jobs to a load balancer **32** via a wireless communications network **33** (illustratively represented as a cellular tower in FIG. 1) at Block **51** of FIG. 2 and Block **51'** of FIG. 3. The client device **30b** is a desktop computer, and the client device **31n** is a laptop computer. In this example, the client processing (CP) jobs are wide area network **37** (e.g., Internet) access jobs, as will be appreciated by those skilled in the art.

Each of the client devices **31a-31n** has a respective unique client identification (ID) associated therewith. For example, with the mobile device **31a** the client ID may be an International Mobile Equipment Identity (IMEI) number. With respect to the client devices **31b, 31n,** the client IDs may be respective Internet protocol (IP) addresses, for example. Other suitable types of client IDs may also be used, as will be appreciated by those skilled in the art.

The system **30** further illustratively includes a plurality of geographically spaced apart servers **34a-34n** which are configured to process the client processing jobs. By way of example, the servers **34a-34n** may be located in different data centers. Similar to the client devices **31a-31n,** each of the servers **34a-34n** also has a respective unique server ID associated therewith. Here again, the server IDs may be IP addresses, although other suitable ID types may also be used.

The load balancer **32** illustratively includes a client device interface module **35** configured to receive the client processing jobs from the plurality of client devices **31a-31b,** at Block **52** of FIG. 2 and Block **52'** of FIG. 3. The load balancer **32** further illustratively includes a server interface module **36** which cooperates with the client device interface module **35** and is configured to perform load balancing for the received client jobs. More particularly, for each client processing job, the server interface module **36** generates a respective load balancing score for each server **34a-34n,** at Block **53** of FIG. 2. Each load balancing score is based upon the client ID of the client device **31a-31n** requesting the client processing job, a hash of the server ID of each server **34a-34n,** a processing load metric for each server, and a separation metric corresponding to a separation between the requesting client device and each server.

By way of example, the separation metric may correspond to a number of network nodes between the requesting client device **31a-31n** and each server **34a-34n,** a geographic distance between the requesting client device and each server, a network latency between the requesting client device and each server or other time or distance-based metric which can differentiate a pair of a requesting client device and a server from another pair of a requesting client device and a sever. Furthermore, in example embodiments, the processing load metric indicates a processing load for each server **34a-34n,** and may be based upon one or more factors including a number of pending client jobs, available memory, processing speed, etc., as will be appreciated by those skilled in the art.

At Block **53'** of FIG. 3, in accordance with one example approach, the server interface module **36** generates the respective load balancing score for each server as follows:

$$srv\_hash = f(h(server\ ID),\ load\ metric);$$

and

$$Score = g(client\ ID,\ srv\_hash,\ separation\ metric).$$

In other words, srv_hash is a function based upon h(Server ID), a hash of the server ID of the given server **34a-34n,** and a load balancing metric. Score is the load balancing score and it is based on a function of the client ID, srv_hash, and a separation metric. Another example approach is that the srv_hash function may be based on a function of a hash of both the server ID and the load metric, as opposed to a function of the load metric and a hash of the server ID by itself.

In accordance with the example implementation, the packet router **32** computes (or pre-computes upon server connection) the srv_hash function for each connected server **34a-34n,** which it stores in a hash table, etc., to reduce packet routing time. Incoming client processing jobs (which may be in the form of packets) are passed through the Score function g(client ID, srv_hash, separation metric) for each connected server **34a-34n** to compute a load balancing score for each server. The functions f() and g() may be chosen such that the separation and load weighting is proportional, although this need not be the case in all example embodiments. Example functions for f() and g() are discussed further below. By way of example, these may also be hash functions in some example embodiments. In accordance with an example embodiment, the processing job is assigned to the server **34** with the highest score, although in some implementations different functions may be used such that the lowest score is appropriate, for example.

Various hashing functions known to those skilled in the art may be used, such as cyclic redundancy checks, checksum functions, cryptographic hash functions, etc. A consideration for the particular hashing (or other) function to be used is that it returns a consistent result each time a given ID is hashed therewith, as opposed to providing a pseudo-random result. As noted above, hash values for the servers **34a-34n** (and, optionally, the client devices **31a-31n)** may be generated before hand and stored in a hash table, if desired, to expedite determination of the load balancing scores as new client processing jobs are received.

The server interface module **36** is configured to assign each client processing job to a respective one of the servers **34a-34n** based upon the load balancing scores for the client processing job, at Block **54** of FIG. 2 and Block **54'** of FIG. 3, as described above, and the job is then forwarded to and processed by the respective server, at Block **55** of FIG. 2 and Block **55'** of FIG. 3, thus concluding the method illustrated in FIG. 2 (Block **56).** Using the above-described load balancing approach, the load balancer **32** may usefully provide a preference to servers **34a-34n** that have a relatively small separation with respect to a given one of the client devices **31a-31n,** yet still account for server load to provide enhanced performance. That is, the load balancing will tend to "default" to one of servers **34a-34n** that has the lowest separation to the given client device **31,** unless that server is highly loaded.

As noted above, the client processing jobs may be formatted in packets. The load balancer **32** may therefore be implemented as a packet router. The packet router will have information about the clients **31a-31n,** including their unique client IDs. For example, the incoming packets may be tagged with the client IDs. Moreover, the packet router also has (or determines) information about the destination servers **34a-34n,** including their unique server IDs, processing load metrics, and separation metrics. The packet router will perform the above-described hash-based function on each client-server pair, giving each pair a score. Once the packet router has calculated the function for each client-server pair, the client processing job is routed to the highest (or, in some example embodiments, lowest) scoring server, as appropriate for the given hashing function. Again, this provides a mechanism such that servers **34a-34n** with the least separation are more likely to be routed to, given equal load factors. It also provides that servers **34a-34n** which are further separated will continue to be routed to if the loads are sufficiently high on more closely separated servers.

An example Java algorithm for implementing the above-described hash function approach is as follows:

```
Map map;
function server_connect (ServerID, weight, ...) {
    map[ServerID] = f(ServerID, weight);
}
function choose_server(clientPacket, clientID) {
    int max_score = -1;
    server chosen_server = null;
    for server_value in map; do {
      if (serverID.connected == false)
         break;
      cur_score = g(server_value, clientID,
         separation (serverID, clientID));
      if (cur_score > max_score) {
         max_score = cur_score;
         chosen_server = serverID;
       }
    }
    return chosen_server;
            }
function f(ServerID id, Weight w) {
    // This may be a O (1) function which
    // distributes id's and weights among a fairly large
(integer)
    // number-space. It will return an integer which can
be used for
    // future client-server hash calculations.
}
function g(hash h, ClientID id, Separation d) {
    // This may be a O(1) function which
    // provides a fairly large variance when considering
many
    // client ID's and server hashes, such that when
computing
    // many scores, there will be a large distribution
across
    // the (integer) number-space.
}
function separation(ServerID s_id, ClientID c_id) {
    // Function returns the relative separation between the
client
    // and server. This may be a function of server alone,
or
    // a combination of server and packet router, or
client, server
    // and packet router
}
```

The hashing functions srv_hash = f(ServerID, load) and Score = g(srv_hash, ClientID, separation) above may be implemented in various ways to best distribute the traffic depending on the given application. For example, the Fowler-Noll-Vo hash function may be employed and modified as follows:

```
public class FnvHash {
    private static final int kFNVOffset = (int)
21661362611;
```

```
private static final int kFNVPrime = 16777619;
public static long fnvHashCode(final String str) {
  int hash = kFNVOffset;
  for (int i = 0; i < str.length(); i++) {
     hash ^= (0x0000ffff & (int)str.charAt(i));
     hash ^= kFNVPrime;
  }
  return 0x00000000ffffffffl & (long) hash;
}
public static long server_hash (String serverID, int
weight) {
   return (fnvHashCode(serverID)*weight);
}
public static long client_hash (long server_hash,
String clientID, int separation) {
   long client_hash = fnvHashCode(clientID);
   long comb_hash = (client_hash << 16) ^ server_hash;
   comb_hash = comb_hash >> (separation-1);
} return (comb_hash);
```

This particular implementation has upper and lower bounds on load (i.e., load > 0) and bounds on separation (since Java longs are 64 bytes). In the above example, the load metric is referred to as "weight".

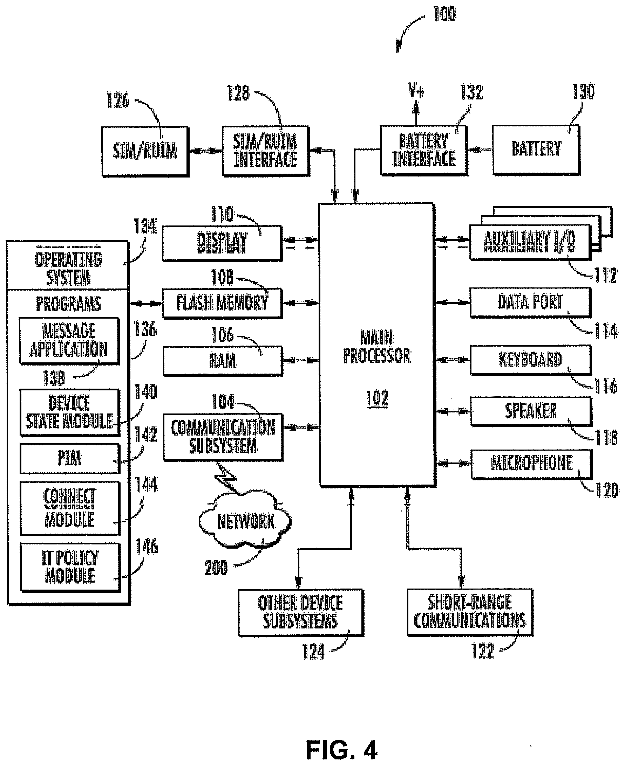

Example components of a mobile wireless communications device that may be used in accordance with an example embodiment are further described below with reference to FIGS. 4-7. Generally speaking, a mobile device may be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 4-7.

Referring first to FIG. 4, shown therein is a block diagram of an example embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this example embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106,** a flash memory **108,** a display **110,** an auxiliary input/output (I/O) subsystem **112,** a data port **114,** a keyboard **116,** a speaker **118,** a microphone **120,** short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200,** and device-resident functions such as a calculator or task list.

The mobile device **100** can send and receive communication signals over the wireless network 200 after required network registration or activation procedures have been completed. Network access is associated with a subscriber or user of the mobile device **100.** To identify a subscriber, the mobile device **100** requires a SIM/RUIM card **126** (i.e., Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100,** among other things. Without the SIM card **126,** the mobile device **100** is not fully operational for communication with the wireless network **200.** By inserting the SIM card/RUIM **126** into the SIM/RUIM interface **128,** a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128,** it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including date book (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some example embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system **134** and the software components **136** to **146** that are executed by the main processor **102** are typically stored in a persistent store such as the flash memory **108,** which may alternatively be a read-only memory (ROM) or similar storage element (not shown). Those skilled in the art will appreciate that portions of the operating system **134** and the software components **136** to **146,** such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory **108** of the mobile device **100** or some other suitable storage element in the mobile device **100.** In at least some example embodiments, some of the sent and received messages may be stored remotely from the device **100** such as in a data store of an associated host system that the mobile device **100** communicates with.

The software applications can further include a device state module **140,** a Personal Information Manager (PIM) **142,** and other suitable modules (not shown). The device state module **140** provides persistence, i.e., the device state module **140** ensures that important device data is stored in persistent memory, such as the flash memory **108,** so that the data is not lost when the mobile device **100** is turned off or loses power.

The PIM **142** includes functionality for organizing and managing data items of interest to the user, such as, but not limited to, email, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

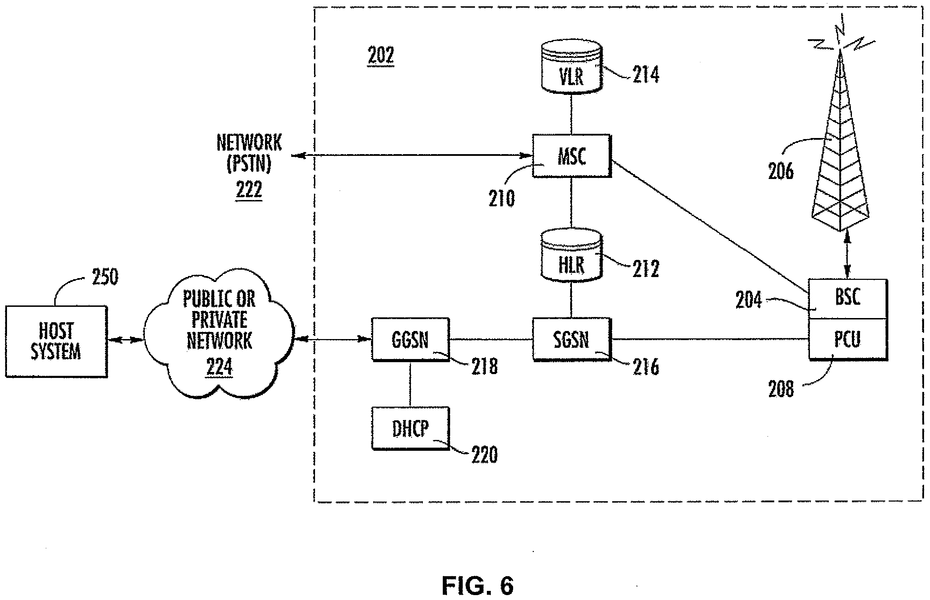

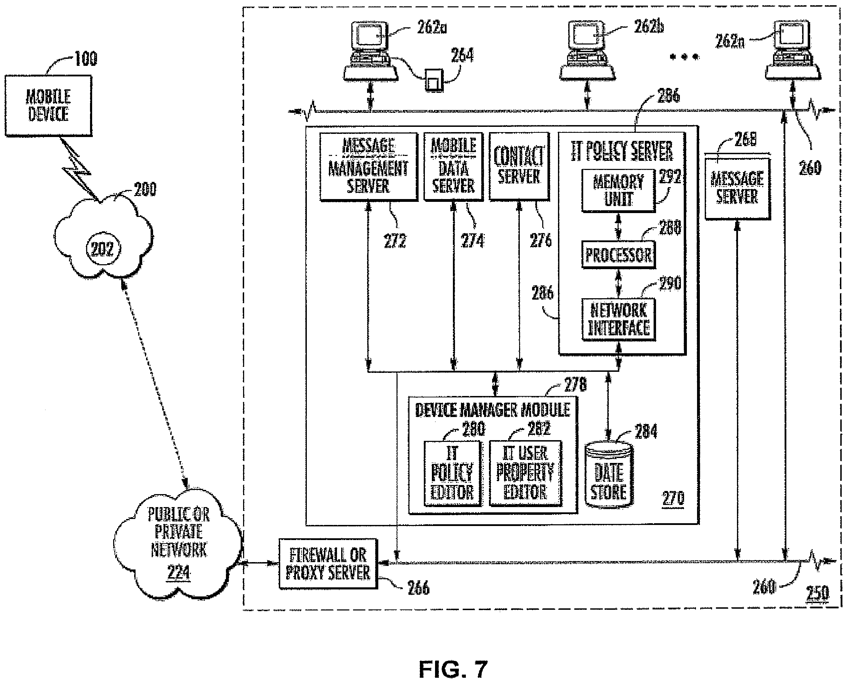

The mobile device **100** also includes a connect module **144,** and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 6 and 7, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system. A subset of applications for which access is provided by the connect module **144** can be used to pass IT policy commands from the host system to the mobile device **100**. This can be done in a wireless or wired manner. These instructions can then be passed to the IT policy module **146** to modify the configuration of the device **100**. Alternatively, in some cases, the IT policy update can also be done over a wired connection.

The IT policy module **146** receives IT policy data that encodes the IT policy. The IT policy module **146** then ensures that the IT policy data is authenticated by the mobile device **100**. The IT policy data can then be stored in the flash memory **106** in its native form. After the IT policy data is stored, a global notification can be sent by the IT policy module **146** to all of the applications residing on the mobile device **100**. Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100**. These software applications can be third party applications, which are added after the manufacture of the mobile device **100**. Examples of third party applications include games, calculators, utilities, etc.

The additional applications can be loaded onto the mobile device **100** through at least one of the wireless network **200,** the auxiliary I/O subsystem **112,** the data port **114,** the short-range communications subsystem **122,** or any other suitable device subsystem **124**. This flexibility in application installation increases the functionality of the mobile device **100** and may provide enhanced on-device functions, communication-related functions, or both. For example, secure communication applications may enable electronic commerce functions and other such financial transactions to be performed using the mobile device **100**.

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100**.

The short-range communications subsystem **122** provides for communication between the mobile device **100** and different systems or devices, without the use of the wireless network **200**. For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an email message, or web page download will be processed by the communication subsystem **104** and input to the main processor **102**. The main processor **102** will then process the received signal for output to the display **110** or alternatively to the auxiliary I/O subsystem **112**. A subscriber may also compose data items, such as email messages, for example, using the keyboard **116** in conjunction with the display

110 and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118,** and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118,** the display **110** can also be used to provide additional information such as the identity of a calling party, duration of a voice call, or other voice call related information.

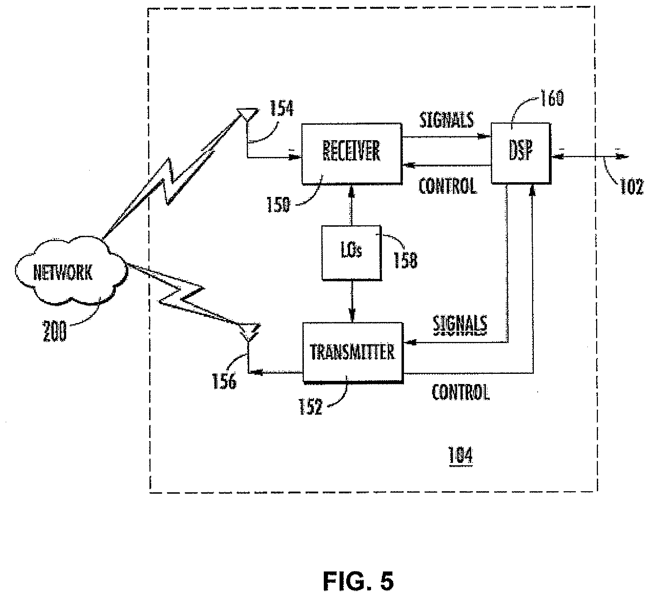

Referring now to FIG. 5, an example block diagram of the communication subsystem component **104** is shown. The communication subsystem **104** includes a receiver **150,** a transmitter **152,** as well as associated components such as one or more embedded or internal antenna elements **154** and **156,** Local Oscillators (LOs) **158,** and a processing module such as a Digital Signal Processor (DSP) **160.** The particular design of the communication subsystem **104** is dependent upon the communication network **200** with which the mobile device **100** is intended to operate. Thus, it should be understood that the design illustrated in FIG. 5 serves only as one example.

Signals received by the antenna **154** through the wireless network **200** are input to the receiver **150,** which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160.** In a similar manner, signals to be transmitted are processed, including modulation and encoding, by the DSP **160.** These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device 100 and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network 200 and is otherwise turned off to conserve resources. Similarly, the receiver **150** is periodically turned off to conserve power until it is needed to receive signals or information (if at all) during designated time periods.

Referring now to FIG. 6, a block diagram of an example implementation of a node **202** of the wireless network **200** is shown. In practice, the wireless network **200** includes one or more nodes **202.** In conjunction with the connect module **144,** the mobile device **100** can communicate with the node **202** within the wireless network **200.** In the example implementation of FIG. 6, the node **202** is configured in accordance with General Packet Radio Service (GPRS) and Global Systems for Mobile (GSM) technologies. The node **202** includes a base station controller (BSC) **204** with an associated tower station **206,** a Packet Control Unit (PCU) **208** added for GPRS support in GSM, a Mobile Switching Center (MSC) **210,** a Home Location Register (HLR) **212,** a Visitor Location Registry (VLR) **214,** a Serving GPRS Support Node (SGSN) **216,** a Gateway GPRS Support Node (GGSN) **218,** and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208,** the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell." The fixed transceiver equipment transmits communication signals to and receives communication signals from mobile devices within its cell via the station **206.** The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212**. The HLR **212** also contains location information for each registered mobile device and can be queried to determine the current location of a mobile device. The MSC **210** is responsible for a group of location areas and stores the data of the mobile devices currently in its area of responsibility in the VLR **214**. Further, the VLR **214** also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214,** the amount of traffic between these nodes can be reduced so that voice and data services can be provided with faster response times and at the same time requiring less use of computing resources.

The SGSN **216** and the GGSN **218** are elements added for GPRS support, namely packet switched data support, within GSM. The SGSN **216** and the MSC **210** have similar responsibilities within the wireless network **200** by keeping track of the location of each mobile device **100**. The SGSN **216** also performs security functions and access control for data traffic on the wireless network **200**. The GGSN **218** provides internetworking connections with external packet switched networks and connects to one or more SGSN's **216** via an Internet Protocol (IP) backbone network operated within the network **200**. During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218**. There are many mechanisms for dynamic IP assignment, including using a combination of a Remote Authentication Dial-In User Service (RADIUS) server and a DHCP server. Once the GPRS Attach is complete, a logical connection is established from a mobile device **100,** through the PCU **208,** and the SGSN **216** to an Access Point Node (APN) within the GGSN **218.** The APN represents a logical end of an IP tunnel that can either access direct Internet compatible services or private network connections. The APN also represents a security mechanism for the network **200,** insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200**. To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220**.

Referring now to FIG. 7, shown therein is a block diagram illustrating components of an example configuration of a host system **250** that the mobile device **100** can communicate with in conjunction with the connect module **144**. The host system **250** will typically be a corporate enterprise or other local area network (LAN), but may also be a home office computer or some other private system, for example, in variant implementations. In this example shown in FIG. 7, the host system **250** is depicted as a LAN of an organization to which a user of the mobile device **100** belongs. Typically, a plurality of mobile devices can communicate wirelessly with the host system **250** through one or more nodes **202** of the wireless network **200**.

The host system **250** includes a number of network components connected to each other by a network **260**. For instance, a user's desktop computer **262a** with an accompanying cradle **264** for the user's mobile device **100** is situated on a LAN connection. The cradle **264** for the mobile device **100** can be coupled to the computer **262a** by a serial or a Universal Serial Bus (USB) connection, for example. Other user computers **262b-262n** are also situated on the network **260,** and each may or may not be equipped with an accompanying cradle **264**. The cradle **264** facilitates the loading of information (e.g., PIM data, private symmetric encryption keys to facilitate secure communications) from the user computer **262a** to the mobile device **100,** and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 7. Furthermore, only a subset of network components of the host system **250** are shown in FIG. 4 for ease of exposition, and it will be understood by persons skilled in the art that the host system **250** will include additional components that are not explicitly shown in FIG. 5 for this example configuration. More generally, the host system **250** may represent a smaller part of a larger network (not shown) of the organization, and may include different components and/or be arranged in different topologies than that shown in the example embodiment of FIG. 7.

To facilitate the operation of the mobile device **100** and the wireless communication of messages and message-related data between the mobile device **100** and components of the host system **250,** a number of wireless communication support components **270** can be provided. In some implementations, the wireless communication support components **270** can include a message management server **272,** a mobile data server **274,** a contact server **276,** and a device manager module **278.** The device manager module **278** includes an IT Policy editor **280** and an IT user property editor **282,** as well as other software components for allowing an IT administrator to configure the mobile devices **100.** In an alternative example embodiment, there may be one editor that provides the functionality of both the IT policy editor **280** and the IT user property editor **282.** The support components **270** also include a data store **284,** and an IT policy server **286.** The IT policy server **286** includes a processor **288,** a network interface **290** and a memory unit **292.** The processor **288** controls the operation of the IT policy server **286** and executes functions related to the standardized IT policy as described below. The network interface **290** allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device **100** in this alternative implementation.

Messages intended for a user of the mobile device **100** are initially received by a message server **268** of the host system **250.** Such messages may originate from any number of sources. For instance, a message may have been sent by a sender from the computer **262b** within the host system **250,** from a different mobile device (not shown) connected to the wireless network **200** or a different wireless network, or from a different computing device, or other device capable of sending messages, via the shared network infrastructure **224,** possibly through an application service provider (ASP) or Internet service provider (ISP), for example.

The message server **268** typically acts as the primary interface for the exchange of messages, particularly email messages, within the organization and over the shared network infrastructure **224.** Each user in the organization that has been set up to send and receive messages is typically associated with a user account managed by the message server **268.** Some example implementations of the message server **268** include a Microsoft Exchange™ server, a Lotus Domino™ server, a Novell Groupwise™ server, or another suitable mail server installed in a corporate environment. In some implementations, the host system **250** may include multiple message servers **268.** The message server **268** may also be adapted to provide additional functions beyond message management, including the management of data associated with calendars and task lists, for example.

When messages are received by the message server **268,** they are typically stored in a data store associated with the message server **268.** In at least some example embodiments, the data store may be a separate hardware unit, such as data store **284,** that the message server **268** communicates with. Messages can be subsequently retrieved and delivered to users by accessing the message server **268.** For instance, an email client application operating on a user's computer **262a** may request the email messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e., those received in the past two to three months for example) can be stored on the mobile device **100.**

When operating the mobile device **100,** the user may wish to have email messages retrieved for delivery to the mobile device **100**. The message application **138** operating on the mobile device **100** may also request messages associated with the user's account from the message server **268**. The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device **100** is assigned its own email address, and messages addressed specifically to the mobile device **100** are automatically redirected to the mobile device **100** as they are received by the message server **268**.

The message management server **272** can be used to specifically provide support for the management of messages, such as email messages, that are to be handled by mobile devices. Generally, while messages are still stored on the message server **268,** the message management server **272** can be used to control when, if, and how messages are sent to the mobile device **100**. The message management server **272** also facilitates the handling of messages composed on the mobile device **100,** which are sent to the message server **268** for subsequent delivery.

For example, the message management server **272** may monitor the user's "mailbox" (e.g., the message store associated with the user's account on the message server **268**) for new email messages, and apply user-definable filters to new messages to determine if and how the messages are relayed to the user's mobile device **100**. The message management server **272** may also compress and encrypt new messages (e.g., using an encryption technique such as Data Encryption Standard (DES), Triple DES, or Advanced Encryption Standard (AES)) and push them to the mobile device **100** via the shared network infrastructure **224** and the wireless network **200**. The message management server **272** may also receive messages composed on the mobile device **100** (e.g., encrypted using Triple DES), decrypt and decompress the composed messages, re-format the composed messages if desired so that they will appear to have originated from the user's computer **262a,** and re-route the composed messages to the message server **268** for delivery.

Certain properties or restrictions associated with messages that are to be sent from and/or received by the mobile device **100** can be defined (e.g., by an administrator in accordance with IT policy) and enforced by the message management server **272**. These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g., "blocks") of a message stored on the message server **268** to the mobile device **100**. For example, in some cases, when a message is initially retrieved by the mobile device **100** from the message server **268,** the message management server **272** may push only the first part of a message to the mobile device **100,** with the part being of a pre-defined size (e.g., 2 KB). The user can then request that more of the message be delivered in similar-sized blocks by the message management server **272** to the mobile device **100,** possibly up to a maximum predefined message size. Accordingly, the message management server **272** facilitates better control over the type of data and the amount of data that is communicated to the mobile device **100,** and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100**. Accordingly, for a given contact, the contact server **276** can include the name, phone number, work address and email address of the contact, among other information. The contact server **276** can also provide a global address list that contains the contact information for all of the contacts associated with the host system **250**.

It will be understood by persons skilled in the art that the message management server **272,** the mobile data server **274,** the contact server **276,** the device manager module **278,** the data store **284** and the IT policy server **286** do not need to be implemented on separate physical servers within the host system **250**. For example, some or all of the functions associated with the message management server **272** may be integrated with the message server **268,** or some other server in the host system **250**. Alternatively, the host system **250** may include multiple message management servers **272,** particularly in variant implementations where a large number of mobile devices need to be supported.

Alternatively, in some example embodiments, the IT policy server **286** can provide the IT policy editor **280,** the IT user property editor **282** and the data store **284**. In some cases, the IT policy server **286** can also provide the device manager module **278**. The processor **288** of the IT policy server **286** can be used to perform the various steps of a method for providing IT policy data that is customizable on a per-user basis. The processor 288 can execute the editors **280** and **282**. In some cases, the functionality of the editors **280** and **282** can be provided by a single editor. In some cases, the memory unit **292** can provide the data store **284**.

The device manager module **278** provides an IT administrator with a graphical user interface with which the IT administrator interacts to configure various settings for the mobile devices **100**. As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices **100** such as auto signature text, WLAN/VoIP/VPN configuration, security requirements (e.g., encryption algorithms, password rules, etc.), specifying themes or applications that are allowed to run on the mobile device **100,** and the like.

Many modifications and other example embodiments will come to the mind of one skilled in the art having the benefit of the teachings presented in the foregoing descriptions and the associated drawings. Therefore, it is understood that various modifications and embodiments are intended to be included within the scope of the appended claims.

**Claims**

1. A load balancer (32) configured to
   receive client processing jobs from a plurality of client devices (31a-31n) configured to generate client processing jobs and each having a respective unique client identification (ID) associated therewith;
   for each client processing job, generate a respective load balancing score for each server of a plurality of geographically spaced apart servers (34a-34n) configured to process the client processing jobs and each having a respective unique server ID associated therewith, wherein the load balancing score is a function of the client ID of said client device requesting the client processing job, a hash of the server ID of each server, a processing load metric for each server, and a separation metric corresponding to a separation between said requesting client device and each server; and
   assign each client processing job to a respective server based upon the load balancing scores for said client processing job.

2. The load balancer (32) of Claim 1 wherein the separation metric corresponds to a number of network nodes between said requesting client device (31a) and each server.

3. The load balancer (32) of Claim 1 wherein the separation metric corresponds to a geographic distance between said requesting client device (31b) and each server.

4. The load balancer (32) of Claim 1 wherein the separation metric corresponds to a network latency between said requesting client device (31b) and each server.

5. The load balancer (32) of Claim 1 wherein said load balancer (32) is configured to assign each client processing job to a respective server having a highest load balancing score from among the load balancing scores for said client processing job.

6. A load balancing method for a plurality of client devices (31a-31n) configured to generate client processing jobs and each having a respective unique client identification (ID) associated therewith, and a plurality of geographically spaced apart servers (34a-34n) configured to process the client processing jobs and each having a respective unique server ID associated therewith, the method comprising:

   receiving the client processing jobs from the plurality of client devices at a client device interface module;
   for each client processing job, generating a respective load balancing score for each server, wherein the load balancing score is a function of the client ID of the client device (31b) requesting the client processing job, a hash of the server ID of each server, a processing load metric for each server, and a separation metric corresponding to a separation between the requesting client device and each server at a server interface module; and
   assigning each client processing job to a respective server at the server interface module based upon the load balancing scores for the client processing job.

7. The method of Claim 6 wherein the separation metric corresponds to a number of network nodes between the requesting client device (31b) and each server.

8. The method of Claim 6 wherein the separation metric corresponds to a geographic distance between the requesting client device and each server.

9. The method of Claim 6 wherein the separation metric corresponds to a network latency between the requesting client device (31b) and each server.

**10.** A communications system (30) comprising:

a plurality of client devices (31a-31n) configured to generate client processing jobs and each having a respective unique client identification (ID) associated therewith;
a plurality of geographically spaced apart servers (34a-34n) configured to process the client processing jobs and each having a respective unique server ID associated therewith; and
a load balancer (32)in accordance with any of claims 1 to 5.

**Patentansprüche**

**1.** Lastausgleicher (32), der konfiguriert ist zum:

Empfangen von Client-Verarbeitungsjobs von mehreren Client-Vorrichtungen (31a-31n), die dazu konfiguriert sind, Client-Verarbeitungsjobs zu erzeugen, und jeweils eine damit assoziierte jeweilige einzigartige Client-Identifikation (Client-ID) aufweisen;
für jeden Client-Verarbeitungsjob Erzeugen einer jeweiligen Lastausgleich-Wertung für jeden Server von mehreren geografisch beabstandeten Servern (34a-34n), die dazu konfiguriert sind, die Client-Verarbeitungsjobs zu verarbeiten, und jeweils eine damit assoziierte jeweilige eindeutige Server-ID aufweisen, wobei die Lastausgleich-Wertung von der Client-ID der Client-Vorrichtung, die den Client-Verarbeitungsjob anfordert, einem Hash der Server-ID jedes Servers, einer Verarbeitungslastmetrik für jeden Server und einer Trennungsmetrik, die einer Trennung zwischen der anfordernden Client-Vorrichtung und jedem Server entspricht, abhängt; und
Zuordnen jedes Client-Verarbeitungsjobs einem jeweiligen Server auf der Basis der Lastausgleich-Wertungen für den Client-Verarbeitungsjob.

**2.** Lastausgleicher (32) nach Anspruch 1, wobei die Trennungsmetrik einer Anzahl von Netzknoten zwischen der anfordernden Client-Vorrichtung (31a) und jedem Server entspricht.

**3.** Lastausgleicher (32) nach Anspruch 1, wobei die Trennungsmetrik einem geografischen Abstand zwischen der anfordernden Client-Vorrichtung (31b) und jedem Server entspricht.

**4.** Lastausgleicher (32) nach Anspruch 1, wobei die Trennungsmetrik einer Netzlatenz zwischen der anfordernden Client-Vorrichtung (31b) und jedem Sever entspricht.

**5.** Lastausgleicher (32) nach Anspruch 1, wobei der Lastausgleicher (32) dazu konfiguriert ist, jeden Client-Verarbeitungsjob einem jeweiligen Server mit einer höchsten Lastausgleich-Wertung von den Lastausgleich-Wertungen für den Client-Verarbeitungsjobs zuzuordnen.

**6.** Lastausgleichsverfahren für mehrere Client-Vorrichtungen (31a-31n), die dazu konfiguriert sind, Client-Verarbeitungsjobs zu erzeugen, und jeweils eine damit assoziierte jeweilige einzigartige Client-Identifikation (Client-ID) aufweisen, und mehrere geografisch beabstandete Server (34a-34n), die dazu konfiguriert sind, die Client-Verarbeitungsjobs zu verarbeiten, und jeweils eine damit assoziierte jeweilige eindeutige Server-ID aufweisen, wobei das Verfahren umfasst:

Empfangen der Client-Verarbeitungsjobs von den mehreren Client-Vorrichtungen an einem Client-Vorrichtungsschnittstellenmodul;
für jeden Client-Verarbeitungsjob Erzeugen einer jeweiligen Lastausgleich-Wertung für jeden Server, wobei die Lastausgleich-Wertung von der Client-ID der Client-Vorrichtung (31b), die den Client-Verarbeitungsjob anfordert, einem Hash der Server-ID jedes Servers, einer Verarbeitungslastmetrik für jeden Server und einer Trennungsmetrik, die einer Trennung zwischen der anfordernden Client-Vorrichtung und jedem Server an einem Serverschnittstellenmodul entspricht, abhängt; und
Zuordnen jedes Client-Verarbeitungsjobs einem jeweiligen Server auf der Basis der Lastausgleich-Wertungen für den Client-Verarbeitungsjob.

**7.** Verfahren nach Anspruch 6, wobei die Trennungsmetrik einer Anzahl von Netzknoten zwischen der anfordernden Client-Vorrichtung (31b) und jedem Server entspricht.

**8.** Verfahren nach Anspruch 6, wobei die Trennungsmetrik einem geografischen Abstand zwischen der anfordernden Client-Vorrichtung und jedem Server entspricht.

**9.** Verfahren nach Anspruch 6, wobei die Trennungsmetrik einer Netzlatenz zwischen der anfordernden Client-Vorrichtung (31b) und jedem Sever entspricht.

**10.** Kommunikationssystem (30), umfassend:

mehrere Client-Vorrichtungen (31a-31n), die dazu konfiguriert sind, Client-Verarbeitungsjobs zu erzeugen, und jeweils eine damit assoziierte jeweilige einzigartige Client-Identifikation (Client-ID) aufweisen; mehrere geografisch beabstandete Server (34a-34n), die dazu konfiguriert sind, die Client-Verarbeitungsjobs zu verarbeiten, und jeweils eine damit assoziierte jeweilige eindeutige Server-ID aufweisen; und einen Lastausgleicher (32) gemäß einem der Ansprüche 1 bis 5.

**Revendications**

**1.** Système d'équilibrage de charge (32) configuré pour :

recevoir des tâches de traitement de client à partir d'une pluralité de dispositifs clients (31a à 31n) configurés pour générer des tâches de traitement de client, et comportant chacun une identification (ID) de client unique respective associée à celui-ci ; pour chaque tâche de traitement de client, générer un score d'équilibrage de charge respectif pour chaque serveur d'une pluralité de serveurs géographiquement espacés les uns des autres (34a à 34n) configurés pour traiter les tâches de traitement de client et comportant chacun une ID de serveur unique respective associée à celui-ci, le score d'équilibrage de charge étant fonction de l'ID de client dudit dispositif client demandant la tâche de traitement de client, d'un hachage de l'ID de serveur de chaque serveur, d'une métrique de charge de traitement pour chaque serveur, et d'une métrique de séparation correspondant à une séparation entre ledit dispositif client demandeur et chaque serveur ; et attribuer chaque tâche de traitement de client à un serveur respectif en fonction des scores d'équilibrage de charge pour ladite tâche de traitement de client.

**2.** Système d'équilibrage de charge (32) selon la revendication 1, dans lequel la métrique de séparation correspond à un nombre de noeuds de réseau entre ledit dispositif client demandeur (31a) et chaque serveur.

**3.** Système d'équilibrage de charge (32) selon la revendication 1, dans lequel la métrique de séparation correspond à une distance géographique entre ledit dispositif client demandeur (31b) et chaque serveur.

**4.** Système d'équilibrage de charge (32) selon la revendication 1, dans lequel la métrique de séparation correspond à une latence de réseau entre ledit dispositif client demandeur (31b) et chaque serveur.

**5.** Système d'équilibrage de charge (32) selon la revendication 1, ledit système d'équilibrage de charge (32) étant configuré pour attribuer chaque tâche de traitement de client à un serveur respectif ayant le score d'équilibrage de charge le plus élevé parmi les scores d'équilibrage de charge pour ladite tâche de traitement de client.

**6.** Procédé d'équilibrage de charge pour une pluralité de dispositifs clients (31a à 31n) configurés pour générer des tâches de traitement de client, et comportant chacun une identification (ID) de client unique respective associée à celui-ci, et une pluralité de serveurs géographiquement espacés les uns des autres (34a à 34n) configurés pour traiter les tâches de traitement de client et comportant chacun une ID de serveur unique respective associée à celui-ci, le procédé comprenant :

la réception des tâches de traitement de client à partir de la pluralité de dispositifs clients dans un module d'interface de dispositifs clients ; pour chaque tâche de traitement de client, la génération d'un score d'équilibrage de charge respectif pour chaque serveur, le score d'équilibrage de charge étant fonction de l'ID de client du dispositif client (31b) demandant la tâche de traitement de client, d'un hachage de l'ID de serveur de chaque serveur, d'une métrique de charge de traitement pour chaque serveur, et d'une métrique de séparation correspondant à une séparation entre le dispositif client demandeur et chaque serveur dans un module d'interface de serveurs ; et l'attribution de chaque tâche de traitement de client à un serveur respectif dans le module d'interface de serveurs en fonction des scores d'équilibrage de charge pour la tâche de traitement de client.

**7.** Procédé selon la revendication 6, dans lequel la métrique de séparation correspond à un nombre de noeuds de réseau entre le dispositif client demandeur (31b) et chaque serveur.

**8.** Procédé selon la revendication 6, dans lequel la métrique de séparation correspond à une distance géographique entre le dispositif client demandeur et chaque serveur.

**9.** Procédé selon la revendication 6, dans lequel la métrique de séparation correspond à une latence de réseau entre le dispositif client demandeur (31b) et chaque serveur.

**10.** Système de communications (30), comprenant :

une pluralité de dispositifs clients (31a à 31n) configurés pour générer des tâches de traitement de client et comportant chacun une identification (ID) de client unique respective associée à celui-ci ;
une pluralité de serveurs géographiquement espacés les uns des autres (34a à 34n) configurés pour traiter les tâches de traitement de client et comportant chacun une ID de serveur unique respective associée à celui-ci ; et
un système d'équilibrage de charge (32) selon l'une quelconque des revendications 1 à 5.

**FIG. 1**

31a

CP Job 1
(CID 1)

33

31b

CP Job 2
(CID 2)

31n

CP Job n
(CID n)

36

35

32

**Load Balancer**

**Client Device Interface Module**

- Receive client processing jobs from client devices

**Server Interface Module**

- For each client processing job, generate respective load balancing score for each server based upon client ID (CID) of client device requesting job, server ID (SID) of each server, processing load metric for each server, and separation metric corresponding to a separation between requesting client device and each server
- Assign each client processing job to respective server based upon load balancing scores for client processing job

CP Job 2

34a

Server
(SID 1)

34b

CP Job n

Server
(SID 2)

34n

CP Job 1

Server
(SID n)

30

37

Wide Area Network
(e.g., Internet)

EP 2 365 675 B1

18

50

Start

51

Generate client processing jobs,
each having a respective unique
client ID associated therewith

52

Receive client processing jobs from
client devices

53

For each client processing job,
generate respective load balancing
score for each server based upon
client ID of client device requesting
client processing job, server ID of
each server, a processing load
metric for each server, and a
separation metric corresponding to a
separation between requesting client
device and each server

54

Assign each client processing job to
a respective server based upon load
balancing scores for client
processing job

55

Process client processing jobs at
respective servers

56

Finish

FIG. 2

**FIG. 3**

**FIG. 4**

FIG. 5

**FIG. 6**

EP 2 365 675 B1

**FIG. 7**

EP 2 365 675 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7020698 B

**Non-patent literature cited in the description**

- **FERDEAN C et al.** *A Response Time-Driven Server Selection Substrate for Application Replica Hosting Systems*

- **RANJAN S et al.** *High- Performance Resource Allocation and Request Redirection Algorithms for Web Clusters*